(19) Europäisches Patentamt
European Patent Office
Office européen des brevets

(11) Publication number: **0 613 863 A1**

(12) **EUROPEAN PATENT APPLICATION**

(21) Application number: **94250052.1**

(51) Int. Cl.5: **C02F 5/10**

(22) Date of filing: **01.03.94**

(30) Priority: **03.03.93 US 25483**

(43) Date of publication of application:
**07.09.94 Bulletin 94/36**

(84) Designated Contracting States:
**AT BE CH DE DK ES FR GB GR IE IT LI LU MC NL PT SE**

(71) Applicant: **W.R. Grace & Co.-Conn.**
**Grace Plaza,**
**1114 Avenue of the Americas**
**New York, New York 10036-7794 (US)**

(72) Inventor: **Kelly, John Arthur**
**1005 Abbey Drive**
**Crystal lake, Ill. 60014 (US)**
Inventor: **Hwa, Chih Ming**
**1041 Nightingale Drive**
**Palatine, Ill. 60067 (US)**
Inventor: **Tippett, Roger John Arthur**
**1211 Prairie Brook Drive,**
**Apt. 3B**
**Palatine, Ill. 60067 (US)**
Inventor: **Richardson, John**
**329 East Everett Avenue**
**Crystal Lake, Ill. 60014 (US)**

(74) Representative: **UEXKÜLL & STOLBERG**
**Patentanwälte**
**Beselerstrasse 4**
**D-22607 Hamburg (DE)**

(54) **Ultra-violet responsive polymers for treating aqueous systems.**

(57) A method for treating an aqueous system comprising adding to the system a water-soluble or water-dispersible polymer containing an ultraviolet radiation sensitive moiety and having a CA 500 cloud point of greater than 10 ppm. The polymers of this invention are directly monitorable in the treated aqueous system with conventional ultraviolet spectrometers and may be quantified by applying chemometrics algorithms to the measured spectra.

EP 0 613 863 A1

## Field of the Invention

The present invention is directed to certain novel polymers which are useful for treating aqueous systems and more particularly to water-soluble or water-dispersible polymers which are ultraviolet responsive and which are not easily precipitated by the presence of hardness in aqueous systems.

## Background of the Invention

Much of water used in cooling water systems is supplied by the rivers, lakes, ponds, or the like and contains various amounts of scale-forming salts. In cooling tower systems, the cooling effect is achieved by evaporation of a portion of the circulating water in passing over the tower. Because of the evaporation which takes place in cooling, the solids in the water become concentrated. Because of the inverse solubility of calcium carbonate, calcium sulfate and other hardness salts, the problem of the formation of water-insoluble scales on the heat transfer surfaces is intensified. Scaling is also a serious problem in steam generating systems. Water soluble polymers such as sodium polyacrylate and sodium polymethacrylate have been used as scale inhibitors and dispersants. However, many of these polymers are easily precipitated by hardness. In addition, these polymers are difficult to analyze to assure maintenance of proper dosage levels. For these reasons, the use of these polymers for treating water has not been completely satisfactory.

## Summary of the Invention

It is an object of this invention to provide novel water-soluble or water-dispersible polymers which are useful for treating aqueous systems to inhibit scale and/or corrosion.

It is another object of this invention to provide novel water-soluble or water-dispersible polymers which are useful for treating aqueous systems which are U.V. responsive and are thus easily and directly monitorable in the aqueous system with a U.V. spectrometer.

It is another object of this invention to provide novel water-soluble or water dispersible, U.V. responsive polymers which are not easily precipitated in hard water systems.

In accordance with the present invention, there have been provided certain water-soluble polymers which contain one or more ultraviolet radiation responsive moieties and which have a cloud point greater than 10 ppm as determined by a CA500 cloud point test.

## Detailed Description

The present invention is directed to certain novel water-soluble or water-dispersible polymers which contain one or more ultraviolet (U.V.) responsive moieties and which are insensitive to hardness in the aqueous system, i.e., they do not easily precipitate in hard water systems.

The polymers of the present invention comprise water-soluble or water dispersible polymer compositions wherein a polymer chain, based on carbon-carbon linkages, has incorporated therein a co-monomer which is U.V. responsive and which imparts to the polymer the ability to remain in solution in relatively hard water systems. As used herein, the terminology U.V. responsive refers to a co-monomer in the polymer which possesses a detectable absorbance or emission spectrum in the ultraviolet spectrum. For purposes of this invention, a U.V. responsive moiety is considered detectable if it has a chromophore with at least 0.1 absorbance units (or corresponding emissivity units) in a wavelength range of 200 to 400 nm under normal polymer treatment dosages.

Examples of co-monomers which are useful for preparing the U.V. responsive polymers of the present invention may be illustrated by the following structures:

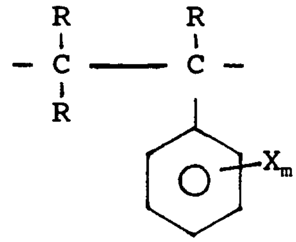

or 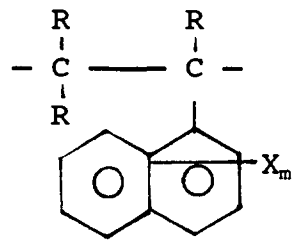

or 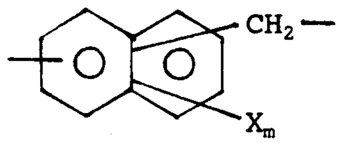

wherein each R is independently selected from the group consisting of hydrogen and $C_1$ to $C_4$ alkyl, X is independently selected from the group consisting of $-SO_3H$, $-PO_3H$, $-COOH$ and m is an integer from 0 to 4, or water soluble salts thereof. The above recurring units are generally present in the polymer in at least 5 mole percent.

The water-soluble polymers containing UV-responsive moiety may be prepared by conventional techniques which are well known to those skilled in the art. A convenient method for preparing these polymers is to add a polymerizable monoethylenic compound to water, with continuous mixing and heat this solution to 75 °C. Then add a monomer containing a UV-responsive moiety (e.g., sodium styrene sulfonate) to the mixture and continue to heat to reflux. Slowly add an initiator such as e.g. sodium persulfate and until polymerization is complete. Alternatively, the polymers of this invention may be prepared by contacting a naphthalene compound under reactive conditions with an aldehyde.

The UV portion of the spectrum is usually defined as having a wavelength in the range between 200 nm to 400 nm. Polymers containing conjugated double bonds will absorb light in the UV or visible region. Absorbance is defined as the log of the ratio of the intensity of the incident light to the intensity of the transmitted light.

$$\text{i.e.} \qquad A = \log \frac{I_o}{I}$$

where

A = Absorbance
$I_o$ = Intensity of the incident light
I = Intensity of the transmitted light

The extent of absorption of ultraviolet light is directly proportional to the concentration of sample through which the light passes. This relationship is expressed by the Beer-Lambert equation as follows:

$A = \epsilon Cl$

where

A = Absorbance

C = Sample concentration (mol/litre)
l = Cell path length (cm)
$\epsilon$ = Extinction coefficient ($mol^{-1}\ L\ cm^{-1}$)

Description of UV spectra is usually tabulated by noting $\lambda_{MAX}$ the wavelength of maximum absorption (peaks) and $\epsilon_{MAX}$ the extinction coefficient, a constant characteristic of the particular compound at the wavelength $\lambda_{MAX}$. For purposes of this invention, it is hard to define concentration in terms of mol/litre when considering polymers especially copolymers and terpolymers. Hence we can redefine the equation in terms of concentration in mg/L (ppm) such that:

$$A = kCl$$

where
A = Absorbance
C = Concentration (mg/L)
l = Cell path length (cm)
k = Extinction coefficient ($mg^{-1}\ L\ cm^{-1}$)

Thus, in accordance with the present invention, it is possible to directly and continuously detect the absorption or emission spectra of the U.V. responsive polymers of this invention, optionally with one or more U.V. responsive inert tracers in aqueous systems using an ultraviolet spectrometer.

In general, any commercial grade U.V. spectrometer may be used to monitor the U.V. responsive polymers of this invention. It is possible to use fixed wavelength detectors where discrete elements are placed at specific wavelengths which generally correspond to the absorbance or emission maxima for the particular U.V. responsive polymer. Charged-coupled device (CCD) analyzers are also preferred for use herein. In a preferred embodiment, the detector is an on-line UV diode array spectrometer having a wavelength range of from 200 to 400 nm.

It is preferred that the detector have a resolution of at least 10 nm, preferably 2 nm and most preferably 1 nm. The spectrometer may be used to monitor off-line samples, or in a preferred embodiment is equipped with an in-situ or on-line fiber optic probe. In general, the method of this invention involves withdrawing a sample from an aqueous system and analyzing the spectrum in the range 200 to 800 nm. The aqueous system may be monitored continuously such as through a flow cell, or discrete samples may be taken and subjected to various flow injection techniques. For on-line spectral analysis, a flow through optical chamber (optrode) is required. In these systems, light from a Xenon flash lamp is transmitted to the optrode via quartz fiber optic cable. The light is transmitted through the solution and collected in a second fiber optic cable which transmits the light to the spectrometer. In the spectrometer, the light is converted into an analog voltage which is then read by an on board computer where the spectrum of a previously stored deionized water scan is subtracted from the sample spectrum and a "true" spectrum is generated.

Monitoring the level of treatment agent in an aqueous system is necessary to ensure that the correct level of protection is being applied to the system.

Monitoring of the dosage levels of the polymers of this invention in aqueous systems in the presence of background matrix interferences can be accomplished without the need for costly and time consuming separation or derivitization techniques, and provides unique control capabilities which heretofore have not been possible with previous mass balance or inert tracer techniques. Chemometric algorithms may be used to extract and analyze features in the overall absorption or emission spectra that are specific to the qualitative and quantitative contributions from the specific U.V. responsive polymers. Four basic steps are involved in the analysis and control of U.V. responsive polymers in aqueous systems.

The absorption or emission spectra for the U.V. responsive polymers are quantified and used to develop learning sets. This process generally involves scanning several samples of known concentrations of U.V. responsive polymer in a background matrix that is representative of the aqueous system being monitored and preferably involves scanning actual samples taken from the system being monitored. The detected spectral information is labeled with numerical values that assign the known concentration of the U.V. responsive polymer to the spectrum.

The processing of raw data reduces noise and optimizes the ability of the chemometric techniques to compare known spectra with unknown spectra or to act on specific features for the spectra of a multicomponent solution to permit analysis of individual U.V. responsive polymers. Processing of spectra is often performed to aid in the analysis of multi-component solutions or to adjust for noise or drift. Typical techniques include the use of first or second derivatives of the absorption or emission spectrum and the use of Fourier or Walsh transformations. If two original spectra were very similar but not identical, examination of their transformed spectra might reveal their differences. Conversely, if the differences were due to the

presence of noise or drift, comparison of transformed spectra may reveal the similarities not evident in the raw data.

The analysis of absorption or emission data identifies individual U.V. responsive polymers and is used to calculate an estimate of their concentration in the aqueous solution. Once a learning set has been developed for a number of samples of a U.V. responsive polymer in a solvent at different concentration levels, chemometric techniques can be used to develop a calibration and perform an analysis for an unknown solution. There are several chemometric techniques that can be used:

1. PRINCIPAL COMPONENT ANALYSIS is a powerful transformation technique that converts a set of correlated variables into a compressed smaller set of uncorrelated variables.

The purpose of this transformation is to rotate the coordinate system in a way that results in the alignment of information on a fewer number of axes than in the original arrangement. This results in a compression of the variables by allowing those variables that are highly correlated with one another to be treated as a single entity. After Principal Components Analysis, a small set of uncorrelated variables will represent most of information that was in the original set of variables, but will be far easier to use in subsequent analytical models.

Typically, 2 to 4 principal components account for 85% to 98% of the variance of the variables. The principal components that relate to particular U.V. responsive polymer will be the parameters for accurate estimations of chemical concentrations.

Principal component analysis is the preferred chemometric algorithm for use in this invention. In a most preferred embodiment of this invention, the rotated principal component analysis is used. In some cases the reduced set of uncorrelated variables are not strongly correlated with the U.V. responsive polymer of interest. This may be due to the presence of other analytes or matrix effects.

2. REGRESSION ANALYSIS, typically a multiple linear regression is used since multiple wavelengths are used to characterize each U.V. responsive polymer and since multiple U.V. responsive polymers may be monitored. The regression defines the values of known concentrations of the polymer in terms of the significant variables in the signatures for the polymer, then uses this information to define the best fitting plane for the information using least squares techniques to define each boundary of the plane. The measurements of the variables for the unknown is fit to the plane in order to recognize and assign a predicted value to an unknown concentration of the polymer. This technique is generally limited to relatively "clean" systems where there is not a significant amount of background matrix interference.

3. DISCRIMINANT ANALYSIS, where absorption or emission variables at significant wavelengths from the calibration set are used to organize the information for known concentrations of the polymer into clustered groups, so that linear decision boundaries can be defined to separate the clusters. A U.V. responsive polymer of unknown concentration can be matched with the closest group based on detection of the significant variables. Typically, the unknown is assigned a characteristic or average value of the group to which it has been matched. This is a very useful technique for quality screening, where the sample is to be sorted into defined categories (acceptable/suspect/unacceptable) based on measured comparisons between the samples and the clusters. However, this technique requires a very large database to obtain statistically significant results.

The comparison of the calculated results from the concentration determination to predefined set points assures optimum dosage levels for all U.V. responsive polymers in the aqueous systems and if the results are outside the predefined set points, the dosage amounts may be modified accordingly.

In a preferred embodiment of this invention, a multi sample calibration based on a principal component regression approach with first and second derivative options is used. A stepwise regression of the principal components allows for the selection of the most accurate method for each U.V. responsive polymer based on the highest coefficient of determination (r2) value.

A further calibration step can be performed if the coefficient of determination is still low from the above calibration sequence. This involves the concept of rotated principal components. Such rotation allows for the concentration of all of the relevant information for a particular U.V. responsive polymer into a single rotated principal component. We have discovered that the use of rotated principal components gives the invention the ability to detect weak UV absorbing or emitting species that would normally not be quantifyable using more conventional chemometric techniques.

By having the monitoring device of this invention connected to a logic controlled feed system, the entire process could be automated to maintain optimum levels of corrosion inhibitor and scale inhibitor at all times.

The method of the present invention may be used in combination with other standard monitoring techniques to provide enhanced, comprehensive control of treatment programs in aqueous systems. These monitoring techniques include, but are not limited to monitors or sensors for measuring pH, conductivity,

chlorine, selective ions, deposits, total hardness, colorimetry, fouling, oxidation/reduction probes, turbidity, refractive index, mass balance, as well as chromatographic techniques, and the like, and combinations thereof.

The U.V. responsive polymers of this invention have been found to be effective for inhibiting corrosion of metals which are in contact with aqueous systems or for inhibiting the deposition of scale in the aqueous systems. In accordance with the present invention, the corrosion of metals which are in contact with an aqueous system may be prevented or inhibited by adding to the system a corrosion inhibiting amount of the U.V. responsive polymers of this invention, or their water soluble salts. Also in accordance with the present invention, the deposition of scale in aqueous systems may be inhibited or prevented by adding to the system a scale inhibiting amount of the U.V. responsive polymers of the invention. The precise dosage of the corrosion inhibiting or scale inhibiting agents of this invention is not, per se, critical to this invention and depends, to some extent, on the nature of the aqueous system in which it is to be incorporated and the degree of protection desired. In general, the concentration of the U.V. responsive polymers maintained in the system can range from about 0.05 to about 500 ppm. Within this range, generally low dosages of about 200 ppm or less are preferred, with a dosage of between 1 and 50 ppm being most preferred for many aqueous systems, such as for example, many open recirculating cooling water systems. The exact amount required with respect to a particular aqueous system can be readily determined by one of ordinary skill in the art in conventional manners. As is typical of most aqueous systems, the pH is preferably maintained at 7 or above, and is most preferably maintained at 8 or above.

It is considered an important feature of this invention, that the claimed U.V. responsive polymers be calcium insensitive. Calcium sensitivity refers to the tendency of a compound to precipitate with calcium ions in solution. The calcium insensitivity of the claimed compositions permits their use in aqueous systems having water with relatively high hardness. The test for calcium insensitivity of a compound, as used in this application, involves a cloud point test (hereinafter the CA500 cloud point test) where the U.V. responsive polymer is added to hard water containing 500 ppm calcium ion (as $CaCO_3$) which is buffered at pH 8.3 using 0.005 M borate buffer and which has a temperature of 60 °C. The amount of polymer which can be added to the solution until it becomes turbid (the cloud point) is considered to be an indicator of calcium insensitivity.

The calcium insensitive compounds of this invention have cloud points of at least about 10 ppm as determined by the CA500 cloud point test, and preferably have cloud points of at least about 25 ppm, and most preferably have cloud points of at least 50 ppm as determined by the CA500 cloud point test.

Aqueous systems which may be advantageously treated in accordance with the polymers of this invention include, but are not limited to cooling water systems, desalinization units, evaporators, steam generating systems, process streams such as e.g. pulp and papermaking systems, and the like. The terminology "aqueous system" as used herein refers not only to purely aqueous systems where water is the major component, but also to systems where water is present in amounts less than 50% such as e.g., oil-in-water or water-in-oil emulsions. These include drilling mud, lubricating fluids, antifreeze formulations and the like.

Without further elaboration, it is believed that one of ordinary skill in the art using the foregoing detailed description can use the present invention to its fullest extent. The following examples are provided to illustrate the present invention in accordance with the principles of this invention, but are not to be construed as limiting the invention in any way except as indicated in the appended claims. All parts and percentages are by weight unless otherwise indicated.

## Example 1

A calibration of a sodium styrene sulfonate/methacrylic acid copolymer and a sodium naphthalenesulfonate/formaldehyde copolymer was prepared in a synthetic demineralized feed water containing 10 ppm disodium phosphate (as $PO_4$) at pH 10.

### Analytes

1. Sodium styrene sulfonate/methacrylic acid copolymer.
2. Sodium naphthalenesulfonate/formaldehyde copolymer.

| | |
|---|---|
| Number of samples in the learning set | 30 |
| Wavelength range | analyte 1 230-288 nm<br>analyte 2 230-317 nm |
| Concentration ranges in the learning set | analyte 1 0-25 ppm active<br>analyte 2 0-7 ppm active |

The test set contained 5 samples of mixtures of the sodium styrene sulfonate/methacrylic acid copolymer and the sodium naphthalenesulfonate/formaldehyde copolymer.

Table 1

| Sample | Analyte 1 | | | Analyte 2 | | |
|---|---|---|---|---|---|---|
| | Theoretical Conc. ppm | Predicted Conc. ppm | % Error | Theoretical Conc. ppm | Predicted Conc. ppm | % Error |
| 1 | 1.00 | 1.12 | 12.0 | 6.00 | 6.08 | 1.3 |
| 2 | 4.00 | 3.95 | 1.3 | 0.50 | 0.53 | 5.7 |
| 3 | 9.00 | 8.79 | 2.3 | 3.40 | 3.40 | 0.0 |
| 4 | 14.40 | 14.33 | 0.5 | 1.90 | 1.90 | 0.0 |
| 5 | 21.00 | 21.22 | 1.0 | 2.60 | 2.58 | 0.8 |

This example shows that the concentration of both polymers can be measured simultaneously with good accuracy in a synthetic demineralized feed water.

Example 2

A calibration of sodium styrene sulfonate/methacrylic acid copolymer and a copolymer of sodium naphthalenesulfonate and formaldehyde was prepared in zeolite softened water. 10 ppm disodium phosphate was added and the pH was adjusted to 10.0.

Analysis of Zeolite Water

| | |
|---|---|
| Total hardness | 7.3 ppm as $CaCO_3$ |
| Copper | 30 ppb as Cu |
| Iron | <50 ppb as Fe |
| Silica | 7.5 ppm as $SiO_2$ |

Analytes

1. Sodium styrene sulfonate/methacrylic acid copolymer.
2. Sodium naphthalenesulfonate/formaldehyde co-polymer.

| Concentration ranges in the learning set | |
|---|---|
| Analyte 1 | 0-25 ppm active |
| Analyte 2 | 0-7 ppm active |

| Wavelength range | |
|---|---|
| Analyte 1 | 240-298 nm |
| Analyte 2 | 240-327 nm |

The test set contained 5 samples of mixtures of sodium styrene sulfonate/methacrylic acid copolymer and a sodium naphthalenesulfonate/formaldehyde copolymer.

Table 2

| Sample | Analyte 1 | | | Analyte 2 | | |
|---|---|---|---|---|---|---|
| | Theoretical Conc. ppm | Predicted Conc. ppm | % Error | Theoretical Conc. ppm | Predicted Conc. ppm | % Error |
| 1 | 1.00 | 1.25 | 25.0 | 6.00 | 5.98 | 0.3 |
| 2 | 4.00 | 3.94 | 1.5 | 0.50 | 0.51 | 2.0 |
| 3 | 9.00 | 8.93 | 0.7 | 3.40 | 3.36 | 1.2 |
| 4 | 14.40 | 14.01 | 2.7 | 1.90 | 1.87 | 1.6 |
| 5 | 21.00 | 20.33 | 3.2 | 2.60 | 2.63 | 1.2 |

This example shows that the concentration of both polymers can be measured simultaneously with good accuracy in zeolite softened feed water.

Example 3

This example demonstrates that not all water-soluble polymers, nor even all water-soluble polymers containing UV-responsive moiety, exhibit calcium insensitivity. The results are shown in Table 3 below.

Table 3

| Run No. | Additive | Cloud Point (ppm) |
|---|---|---|
| 1 | Polyacrylic acid (PAA-45) | 4 |
| 2 | Sodium polymethacrylate (LPC-30) | 6 |
| 3 | SSS/AA copolymer (2.5/97.5) | 5 |
| 4 | SSS/AA copolymer (5/95) | 7 |
| 5 | SSS/AA copolymer (25/75) | >100 |
| 6 | SSS/AcAm/AA terpolymer (1/20/79) | 12 |
| 7 | SSS/AcAm/AA terpolymer (2.5/20/77.5) | 26 |
| 8 | SSS/AcAM/AA terpolymer (5/20/75) | >100 |
| 9 | SSS/MAA copolymer (5/95) | 5 |
| 10 | SSS/MAA copolymer (10/90) | 17 |
| 11 | SSS/MAA copolymer (15/85) | 40 |
| 12 | SSS/MAA copolymer (20/80) | >100 |
| 13 | SSS/MAA copolymer (25/75) | >100 |
| 14 | SSS/MAA copolymer (50/50) | >100 |
| 15 | SSS/MAA/AA terpolymer (1/20/79) | 8 |
| 16 | SSS/MAA/AA terpolymer (2.5/20/77.5) | 7 |
| 17 | SSS/MAA/AA terpolymer (5/20/75) | 9 |
| 18 | SSS/MAA/AA terpolymer (5/47.5/47.5) | 23 |
| 19 | Sodium styrene sulfonate/maleic acid copolymer (75/25) | >100 |
| 20 | Poly(sodium styrene sulfonate) | >100 |
| 21 | Sodium naphthalene sulfonate/formaldehyde copolymer | >100 |
| SSS = Sodium styrene sulfonate<br>AA = Acrylic acid<br>MAA = Methacrylic acid<br>AcAm = Acrylamide<br>Note: All percentages are by mole. | | |

Example 4

A 25 ppm active solution of polymer was prepared in demineralized water. The pH was adjusted to 11 using sodium hydroxide. A UV spectrum was made between 190 nm to 400 nm on a Perkin Elmer Lambda 6 spectrophotometer using a 1 cm quartz cell, the $\lambda_{MAX}$ and absorbance at $\lambda_{MAX}$ was noted allowing a calculation of $k_{MAX}$ to be made,

$$k_{MAX} = \frac{A}{Cl}$$

Results

Polymer 1 - Polyacrylic acid (PAA-45)
Polymer 2 - Sodium polymethacrylate (LPC-30)
Polymer 3 - Poly(sodium styrene sulfonate)
Polymer 4 - Maleic acid/sodium styrene sulfonate copolymer (25/75)

Polymer 5 - Methacrylic acid/sodium styrene sulfonate copolymer (75/25)
Polymer 6 - Methacrylic acid/sodium styrene sulfonate copolymer (85/15)
Polymer 7 - Sodium naphthalene sulfonate/formaldehyde copolymer

Table 4

| | Primary Band | | Secondary Band | |
|---|---|---|---|---|
| Polymer | $\lambda_{MAX}$ | $k_{MAX}(X\ 10^3)$ | $\lambda_{MAX}$ | $k_{MAX}(X\ 10^3)$ |
| Polymer 1 | * | 1.3[a] | * | 0.3[b] |
| Polymer 2 | * | 0.5[a] | * | 0.0[b] |
| Polymer 3 | 225 | 38.1 | 262 | 1.4 |
| Polymer 4 | 224 | 23.7 | 262 | 1.0 |
| Polymer 5 | 228 | 26.7 | 263 | 1.4 |
| Polymer 6 | 228 | 18.3 | 263 | 0.8 |
| Polymer 7** | 227 | 210.6 | 288 | 22.2 |

* No $\lambda_{MAX}$ above 200 nm
** Tested at 5 ppm active
[a] k at 228 nm
[b] k at 262 nm

A higher $K_{MAX}$ value would suggest a stronger U.V. absorption per ppm of the polymer. As shown in the above table, polyacrylic acid and sodium polymethacrylate have very weak absorbance in the UV range, whereas Polymers 3, 4, 5, 6 and 7 have distinct absorbances in the UV region which makes them readily detectable using spectroscopic methods.

## Claims

**1.** A method for treating an aqueous system comprising adding to the system a water-soluble or water dispersible polymer containing at least one ultraviolet radiation responsive moiety and having a CA 500 cloud point of greater than 10 ppm.

**2.** A method according to claim 1 wherein the aqueous system is selected from the group consisting of steam generating systems, cooling water systems, process water systems, evaporators, desalinization units and pulp and paper water systems.

**3.** A method according to Claim 1 wherein the method of treating the system is selected from the group consisting of scale inhibition, corrosion inhibition, iron dispersion and inert tracer monitoring.

**4.** A method according to Claim 1 wherein the polymer contains recurring units selected from the group consisting of units having the formula:

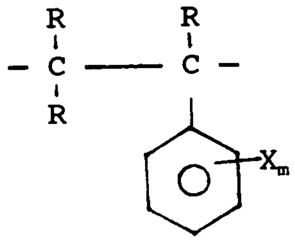

or 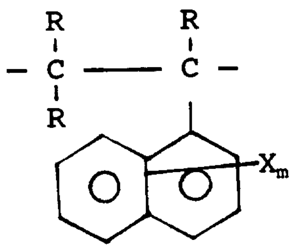

or 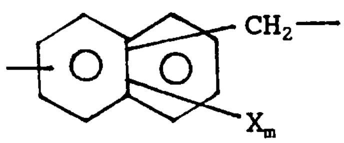

wherein each R is independently selected from the group consisting of hydrogen and $C_1$ to $C_4$ alkyl, X is independently selected from the group consisting of $-SO_3H$, $-PO_3H$, -COOH and m is an integer from 0 to 4, and water soluble salts thereof.

**5.** A method according to Claim 4 wherein the recurring units comprise at least 5 mole percent of the polymer.

**6.** A method according to Claim 1 wherein the polymer is added to the system in a dosage range of from 0.05 ppm to 500 ppm.

**7.** A method according to Claim 6 wherein the dosage amount is from 1 ppm to 50 ppm.

**8.** A method according to Claim 4 wherein the polymer contains monomeric units selected from the group consisting of acrylic acid, methacrylic acid, maleic acid, phosphonate and mixtures thereof.

**9.** A method according to Claim 1 wherein the polymer has a molecular weight in the range 500 to 5,000,000.

**10.** A method according to Claim 9 wherein the molecular weight is in the range 800 to 20,000.

**11.** A method according to Claim 4 wherein the polymer is a copolymer of sodium styrene sulfonate and methacrylic acid.

**12.** A method according to Claim 4 wherein the polymer is a copolymer of sodium naphthalene sulfonate and formaldehyde.

**13.** A method according to Claim 1 wherein the polymer is monitored with an ultraviolet spectrometer to determine its spectrum, and wherein chemometrics algorithms are applied to the spectrum to determine the concentration of polymer in the aqueous system.

European Patent Office

# EUROPEAN SEARCH REPORT

Application Number
EP 94 25 0052

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 288 327 (I.T.GODLEWSKI)<br>* column 2, line 44 - column 3, line 21 *<br>--- | 1-10 | C02F5/10 |
| A | US-A-5 069 798 (C.M.HWA)<br>* column 3, line 15 - column 6, line 34; claim 1 *<br>--- | 1-3,6-8 | |
| A | GB-A-2 238 383 (CIBA-GEIGY)<br>* claims 1,5,6 *<br>----- | 1-3,13 | |
| | | | **TECHNICAL FIELDS SEARCHED (Int.Cl.5)** |
| | | | C02F |

The present search report has been drawn up for all claims

| Place of search | Date of completion of the search | Examiner |
|---|---|---|
| THE HAGUE | 27 April 1994 | Gonzalez Arias, M |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)